# EUROPÄISCHE PATENTSCHRIFT

(11) **EP 1 931 891 B1**
(45) Veröffentlichungstag und Bekanntmachung des Hinweises auf die Patenterteilung: **13.04.2016**
(21) Anmeldenummer: 06793577.5
(22) Anmeldetag: 18.09.2006
(51) Int. Cl.: F16F 15/08, B60T 8/36, F16B 5/06, F16B 21/07, F16B 21/04

(54) **VORRICHTUNG ZUR SCHWINGUNGEN DÄMPFENDEN AUFHÄNGUNG EINES AGGREGATS**
DEVICE FOR SUSPENDING A UNIT SUCH THAT VIBRATIONS ARE DAMPED
DISPOSITIF POUR UTILISER UNE SUSPENSION AMORTISSANT DES VIBRATIONS D'UN AGREGAT

(30) Priorität: 29.09.2005 DE 102005046631
(43) Veröffentlichungstag der Anmeldung: 18.06.2008
(73) Patentinhaber: ROBERT BOSCH GMBH, 70442 Stuttgart (DE)
(72) Erfinder: SCHLITZKUS, Michael, 87463 Dietmannsried (DE); WEH, Andreas, 87477 Sulzberg (DE); MAYR, Matthias, 87549 Rettenberg (DE)
(86) Internationale Anmeldenummer: PCT/EP2006/066434
(87) Internationale Veröffentlichungsnummer: WO 2007/036446

(56) Entgegenhaltungen:
- WO-A-02/10610
- WO-A-2004/031012
- DE-A1- 19 724 177

## Beschreibung

### Stand der Technik

Die Erfindung geht aus von einer Vorrichtung zur Schwingungen dämpfenden Aufhängung eines Aggregats in einer dafür vorgesehenen Aufnahme entsprechend den gattungsbildenden Merkmalen des Anspruchs 1. Derartige Vorrichtungen sind beispielsweise vorbekannt aus der DE 100 36 575 A1. Diese bekannte Vorrichtung hat einen am Aggregat befestigten bolzenförmigen Anker, welcher abschnittsweise über die Außenabmessungen des Aggregats hinausragt. Auf diesem hinausragenden Abschnitt des Ankers ist ein Elastomerteil mit einem im Außendurchmesser reduzierten Mittenabschnitt und mit zwei, zu beiden Seiten davon angeordneten Endabschnitten größerer Außendurchmesser angeordnet. Das Elastomerteil liegt mit einer seiner Stirnflächen an der Außenwandung des Aggregats an und wirkt am dazu gegenüberliegenden Ende mit einem Bund einer Abstützhülse zusammen. Auf die Abstützhülse wirkt eine Schraubmutter ein, welche auf einen Gewindeabschnitt am äußeren Ende des Ankers aufgeschraubt ist. Durch Anziehen der Schraubmutter wird das Elastomerteil axial vorgespannt, was eine Stauchung des Elastomerteils in axialer Raumrichtung und eine Aufweitung in radialer Raumrichtung bewirkt. Aufgrund der Deformation des Elastomerteils legt sich der Mittenabschnitt umfangsseitig gegen die diesen Mittenabschnitt umgreifenden Klauenpaare der Aufnahme an. Gleichzeitig werden die beiden Endabschnitte mit ihren dem Mittenabschnitt zugewandten Flächen seitlich gegen die Klauen gedrückt. Damit ist das Aggregat mittelbar über das Elastomerteil in der Aufnahme gelagert. Üblicherweise werden zur Aggregatelagerung mehrere in verschiedene Raumrichtungen ausgerichtete Vorrichtungen eingesetzt.

Zweck einer solchen elastischen Aufhängung eines Aggregats ist es, eine Schwingungsübertragung vom Aggregat auf die Karosserie eines Kraftfahrzeugs zu dämpfen. Diese Schwingungen werden hervorgerufen von einem Elektromotor, der zur Betätigung von Pumpen am Aggregat vorgesehen ist. Durch den Pumpenbetrieb lässt sich der Bremsdruck an den Radbremsen modulieren. Ohne eine entsprechende Dämpfung der dabei entstehenden mechanischen und hydraulischen Schwingungen können diese Schwingungen auf die Fahrzeugkarosserie übertragen und als störend von den Fahrzeuginsassen wahrgenommen werden.

Nachteiliger Weise ist zum Anziehen der erwähnten Schraubmuttern der Vorrichtungen ein Schraubwerkzeug notwendig. Im Fahrzeug steht in der Regel jedoch nur wenig Freiraum zur Verfügung um dieses Schraubenwerkzeug einzusetzen. Zudem erschwert und verlängert der Schraubwerkzeugeinsatz den Montagevorgang des Aggregats beim Fahrzeughersteller.

### Vorteile der Erfindung

Dem gegenüber weist eine Vorrichtung mit den kennzeichnenden Merkmalen der Anspruchs 1 den Vorteil auf, dass sie aus ihrer Grundposition in ihre Zuspannposition durch manuelle Betätigung, also ohne den Einsatz von Werkzeug, überführbar ist. Dies erleichtert und verkürzt den Montagevorgang. Erfindungsgemäß weist die Vorrichtung hierfür ein axial auf dem Anker verschiebbares und in seinen beiden Endpositionen mit dem Anker verrastetes Spannelement auf.

Gemäß Anspruch 2 kann die Vorrichtung eine integrierte Betätigungssicherung aufweisen. Diese verhindert ein versehentliches Betätigen des Spannmittels und dient gleichzeitig als Transportsicherung für das Aggregat, indem sie Stöße abfängt und somit mechanische Beschädigungen am Aggregat verhindert. Diese Betätigungssicherung ist manuell lösbar. Das Lösen erfolgt gemäß Anspruch 3 durch eine Drehbewegung des Spannelements relativ zum Anker. Eine besonders vorteilhafte Ausgestaltung des Spannmittels ist in Anspruch 4 beansprucht. Demnach ist das Spannmittel als Buchse ausgeführt, die mit Axialschlitzen versehen ist. Dadurch weist das Spannmittel Federeigenschaften auf, durch welche es in seinen beiden Endpositionen zuverlässig mit dem Anker mechanisch verrastbar ist. Die Merkmale nach Anspruch 5 gewährleisten eine leichte Verformbarkeit des Elastomerteils während seiner Montage an die Konsole, also so lange das Spannmittel sich in seiner Grundposition befindet. Gleichzeitig bewirkt das Spannmittel in seiner Zuspannposition eine Versteifung des Elastomerteils und sichert damit dessen Verankerung an der Konsole unter den im Fahrzeugbetrieb auftretenden Bedingungen. Verschiedene alternativ verwendbare Möglichkeiten zur Verankerung der erfindungsgemäßen Vorrichtung an einem Aggregat sind in Anspruch 8 beansprucht.

Weitere Vorteile oder vorteilhafte Weiterbildungen der Erfindung ergeben sich aus den nicht erwähnten Unteransprüchen oder der nachfolgenden Beschreibung.

### Zeichnung

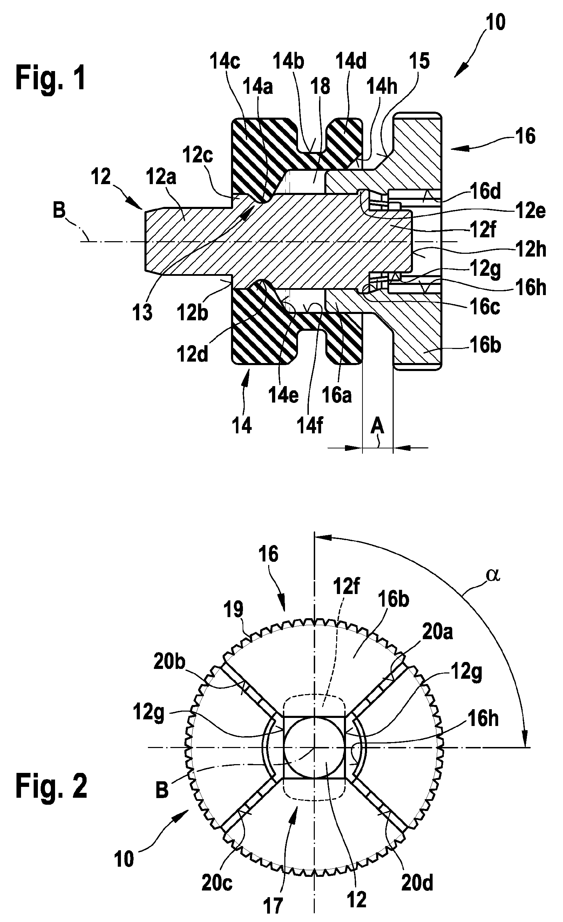

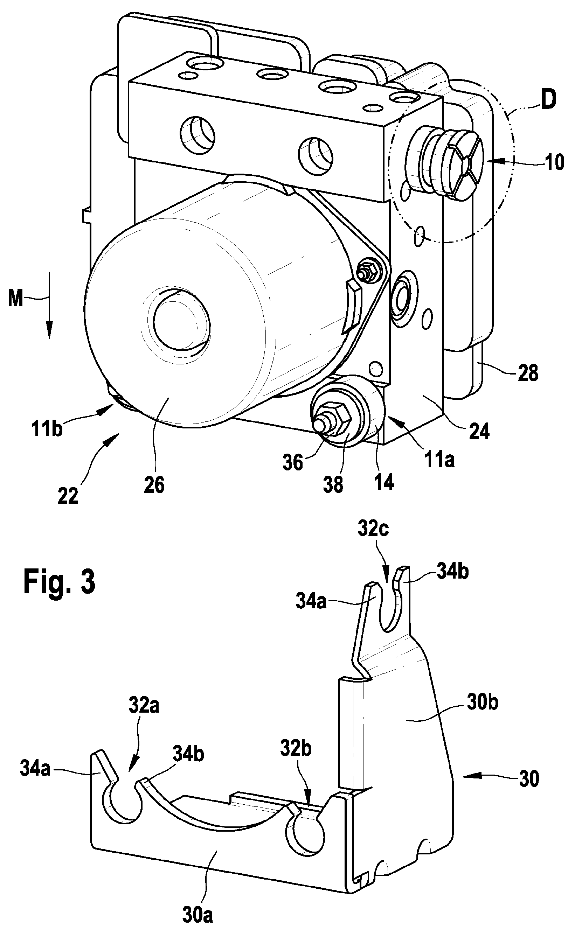

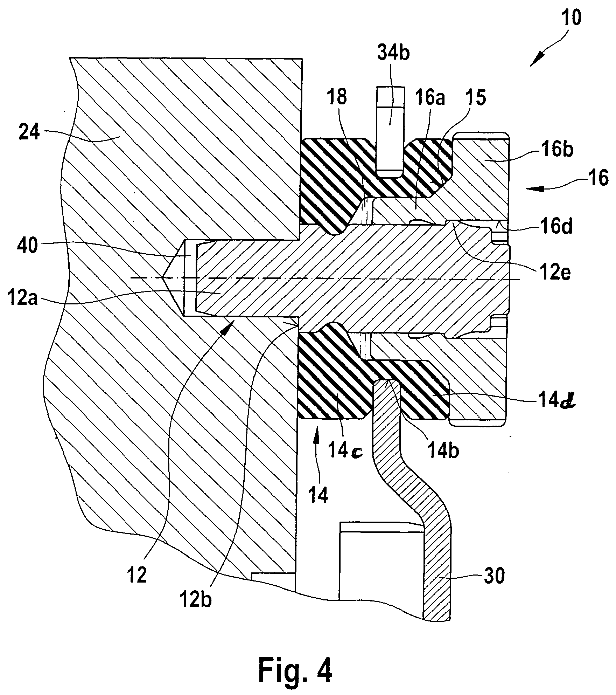

Ein Ausführungsbeispiel der Erfindung ist in der Zeichnung dargestellt und in der nachfolgenden Beschreibung näher erläutert. Die Zeichnung umfasst insgesamt vier Figuren, wobei Figur 1 die erfindungsgemäße Vorrichtung als vormontierte Baugruppe in der Grundposition im Längsschnitt zeigt. Figur 2 stellt eine Seitenansicht dieser vormonierten Baugruppe dar; in Figur 3 ist in dreidimensionaler Darstellung ein Aggregat mit einer angebauten erfindungsgemäßen Vorrichtung und separat eine Konsole abgebildet, in welcher das Aggregat mit Hilfe dieser Vorrichtung anordenbar ist. Die Figur 4 zeigt ein Detail D nach Figur 3 im Längsschnitt, wobei die erfindungsgemäße Vorrichtung hier in ihrer Zuspannposition abgebildet ist. Generell gilt für alle Figuren, dass einander entsprechende Bauteile jeweils mit den selben Bezugszeichen versehen sind.

### Beschreibung des Ausführungsbeispiels

Die in Figur 1 gezeigte Vorrichtung 10 besteht aus einem Anker 12, einem vom Anker getragenen Elastomerteil 14 und einem in das Innere dieses Elastomerteils 14 abschnittsweise eintauchenden Spannmittel 16. Das Spannmittel 16 ist axial verschiebbar auf dem Anker 12 geführt und kann durch manuelle Betätigung aus einer Grundposition in eine Zuspannposition überführt werden.

Beim Anker 12 handelt es sich um ein zylindrisches, vorzugsweise aus Vollmaterial hergestelltes Metallteil mit mehrfach abgesetzter Außenkontur. Die Längsachse dieses Ankers 12 und damit die der gesamten Vorrichtung 10 ist in der Figur 1 mit B bezeichnet. Ein im Außendurchmesser reduzierter erster Ankerabschnitt 12a dient der Befestigung des Ankers in einer Aufnahmebohrung eines in Figur 1 nicht gezeigten Aggregats. Dieser erste Abschnitt 12a kann dazu umfangsseitig mit glatter oder gerändelter Oberfläche ausgeführt werden, wenn vorgesehen ist, den Anker 12 durch Einpressen in einer Aufnahmebohrung zu verankern. Alternativ dazu könnte dieser Ankerabschnitt 12a aber auch mit einem Außengewinde versehen werden, wenn vorgesehen sein sollte, die Verbindung des Ankers 12 mit dem Aggregat als Schraubverbindung auszuführen. Der erste Ankerabschnitt 12a geht in einer rechtwinkligen Schulter 12b in einen zweiten Ankerabschnitt 12c größeren Außendurchmessers über. In einem kurzen axialen Abstand zur Schulter 12b weist dieser zweite Ankerabschnitt 12c eine hohlkehlenförmige Ringnut 12d auf, in welche ein komplementär geformter Fortsatz 14a an der Innenkontur des hülsenförmigen Elastomerteils 14 eingreift. Die Ringnut 12d und der Fortsatz 14a bilden somit einen Formschluss 13 zwischen dem Elastomerteil 14 und dem Anker 12 aus. Der zweite Ankerabschnitt 12c endet an einem, in seinem Außendurchmesser nochmals vergrößerten Vorsprung 12e mit im Wesentlichen rechteckigem Querschnitt. An diesen Vorsprung 12e schließt sich ein dritter Ankerabschnitt 12f an. Dieser dritte Ankerabschnitt 12f ist in Form eines Steges ausgeführt, der sich quer zur Längsachse B in einer zur Zeichenebene senkrecht verlaufenden Ebene erstreckt. Die Stegform ergibt sich durch das Anbringen von zwei einander gegenüber liegenden Abflachungen 12g an der Außenkontur des Ankers 12. Im Falle einer mit einem Aggregat verschraubten Vorrichtung 10 können diese Abflachungen 12g Schlüsselflächen zur Einleitung eines Anzugsdrehmoments auf den Anker 12 bilden.

Am Anker 12 ist, wie bereits erwähnt, ein Elastomerteil 14 durch Formschluss 13 gehalten. Das Elastomerteil 14 weist Hülsenform auf. Es hat einen im Außendurchmesser zurückgenommenen Mittenabschnitt 14b, an den sich zu beiden Seiten Endabschnitte 14c und d größerer Außendurchmesser anschließen. Der dem ersten Ankerabschnitt 12a zugewandte erste Endabschnitt 14c schließt bündig mit der rechtwinkligen Schulter 12b des Ankers 12 ab und weist eine größere axiale Länge auf, als der zweite Endabschnitt 14d. Beide Endabschnitte 14c, d haben vorzugsweise den selben Außendurchmesser. Die Innenkontur des Elastomerteils 14 wird gebildet von dem in die Ringnut 12d des Ankers 12 eingreifenden Fortsatz 14a, welcher im Bereich des ersten Endabschnitts 14c des Elastomerteils 14 ausgebildet ist. Dieser Fortsatz 14a geht in einer konisch ausgeführten Durchmessererweiterung 14e in eine Innenwandung eines sacklochartigen Hohlraums 18 über, welcher zwischen dem Elastomerteil 14, dem Anker 12 und dem Spannmittel 16 eingeschlossen ist. Dessen vom Spannmittel 16 verschlossene Öffnung 14f ist mit einer umlaufenden Austrittsphase 14h versehen. Der Hohlraum 18 erstreckt sich, betrachtet in Richtung der Längsachse B, bis über den Mittenabschnitt 14b in das Innere des Elastomerteils 14, also bis in den Bereich unterhalb des ersten Endabschnitts 14c, hinein.

Das Spannmittel 16 befindet sich in Figur 1 in seiner Grundposition. Es ist ebenfalls hülsenförmig ausgestaltet und weist einen den Anker 12 umschließenden zylindrischen Kragen 16a auf, welcher das Spannmittel 16 axial verschiebbar auf dem Anker 12 führt. Der Kragen 16a geht an dem vom Elastomerteil 14 abgewandten Ende des Spannmittels 16 unter Ausbildung eines Außenkonus 15 in einen radial umlaufenden Bund 16b über. Dessen Außendurchmesser ist auf den Außendurchmesser des Elastomerteils 14 derart abgestimmt, dass der Bund 16b die Stirnfläche des Elastomerteils 14 im Wesentlichen abdeckt. Das Spannmittel 16 weist entlang der Längsachse B in seinem Inneren zwei axial zueinander beabstandete Ringnuten 16c und 16d auf. Diese Ringnuten 16c, d haben rechtwinklige Vorderflanken. Die Rückflanke der dem Elastomerteil 14 zugewandten ersten Ringnut 16c verläuft zum Anker 12 hin angeschrägt. In der gezeigten Grundposition greift in diese erste Ringnut 16c der Vorsprung 12e des Ankers 12 ein. Dadurch ist das Spannmittel 16 unverlierbar mit dem Anker 12 verrastet.

Gemäß Figur 1 erstreckt sich der Kragen 16a des Spannelements 16 nur bis zum Beginn des Mittenabschnitts 14b in das Elastomerteil 14 hinein. Der sich unterhalb des Mittenabschnitts erstreckende Hohlraum 18 erlaubt eine Deformation des Elastomerteils 14 in diesem Bereich mit verhältnismäßig geringer Kraft. Dadurch lässt sich die beschriebene Vorrichtung 10 in eine den Mittenabschnitt 14b umschließende Aufnahme (Figur3, Positionen 32 a, b, c) einführen.

In der dargestellten Grundposition ragt das Spannelement 16 über den mit den beiden Abflachungen 12g versehenen Ankerabschnitt 12f hinaus. Zwischen dem Bund 16b und dem Elastomerteil 14 besteht ein axialer Abstand A. Im Bereich seines Bundes 16b weist das Spannmittel 16 eine besonders geformte Innenkontur 16h auf. Diese ist in ihrer Form und in ihren Abmessungen auf die sich durch die Abflachungen 12g ergebende stegförmige Außenkontur des Ankerabschnitts 12f abgestimmt. Zum Überführen des Spannmittels 16 von der dargestellten Grundposition in die Zuspannposition muss das Spannmittel 16 zunächst durch eine ebenfalls manuell durchführbare Drehbewegung relativ zum Anker 12 ausgerichtet werden. In ausgerichteter Stellung kann der Ankerabschnitt 12f in die Innenkontur 16h des Spannmittels 16 eintauchen. In nicht ausgerichtetem Zustand ist dies nicht möglich, da das Spannmittel 16 mit seiner die Innenkontur 16h umgebenden Wandung an einer Stirnfläche 12h des Ankers 12 anstößt. Damit ist das Spannmittel 16 gegen axiales Verschieben auf dem Bolzen 12 blockiert. Mit anderen Worten wirkt sie Innenkontur 16h des Spannmittels 16 zusammen mit den Abflachungen 12g des Ankers 12 als eine in die Vorrichtung 10 integrierte, manuell lösbare Betätigungssicherung 17 (Figur 2), welche ein unbeabsichtigtes Betätigen des Spannmittels 16 verhindert. Zusätzlich wirkt die Betätigungssicherung 17 als Transportschutz für ein mit einer derartigen Vorrichtung ausgestattetes Aggregat, indem sie dieses Aggregat vor Beschädigungen durch Stöße schützt.

Gemäß Figur 2 ist das Spannmittel 16 mit durchgehenden, sich kreuzenden Längsschnitten 20a - d versehen. Diese Längsschlitze 20 a - d erstrecken sich ausgehend vom Bund 16b in Richtung der Längsachse B bis zu der dem Elastomerteil 14 zugewandten ersten Ringnut 16c. Sie teilen das Spannmittel 16 in vier federelastische Segmente, wobei die einander gegenüber liegenden Segmente in ihren Abmessungen zueinander symmetrisch sind. Das Spannmittel 16 weist dadurch insbesondere im Bereich des Bunds 16b federelastische Eigenschaften auf. In Verbindung mit der angeschrägten Rückflanke der Ringnut 16c ermöglichen es diese, dass durch Beaufschlagung des Spannmittels 16 mit einer Axialkraft eine radiale Aufweitung des Spannmittels 16 und infolge dessen eine Aufhebung der bestehenden Verrastung mit dem Anker 12 stattfindet. Unter Einwirkung der Axialkraft lässt sich das Spannmittel anschließend manuell entlang der Längsachse B des Ankers 12 in seine Zuspannposition verschieben. Die Zuspannposition ist erreicht, sobald der Vorsprung 12e in die vom Elastomerteil 14 entfernt liegende zweite Ringnut 16d des Spannmittels 16 eingerastet ist.

Die federelastischen Segmente begrenzen miteinander die bereits erwähnte Innenkontur 16h. Diese hat im Wesentlichen eine rechteckige Form mit entgegengesetzt zueinander nach außen gekrümmten Schmalseiten. Das Spannmittel 16 in Figur 2 befindet sich in nicht ausgerichteter Stellung zum Ankerabschnitt 12f. Dadurch sind durch die Innenkontur 16h hindurch, die beiden darunter liegenden Abflachungen 12g des Ankerabschnitts 12f abschnittsweise erkennbar. Der weitere Verlauf der Außenkontur des Ankerabschnitts 12f ist vom Spannmittel 16 verdeckt und ist deshalb in Figur 2 anhand gestrichelter Linien angedeutet. Durch eine Drehbewegung des Spannmittels 16 um einen Drehwinkel α von vorzugsweise 90° ist die beschriebene Betätigungssicherung 17 manuell lösbar. Nach einer Ausrichtung des Spannmittels 16 zur Außenkontur des Ankerabschnitts 12f kann das Spannmittel 16 in Richtung der Längsachse B des Ankers manuell aus seiner Grundposition in seine Zuspannposition verschoben werden.

Figur 2 zeigt schließlich noch, dass die Umfangsfläche des Bunds 16b beispielhaft mit einer Oberflächenprofilierung 19 versehen werden kann, um die erläuterte manuelle Betätigung des Spannmittels 16 zu erleichtern.

### Stand der Technik

Die Erfindung geht aus von einer Vorrichtung zur Schwingungen dämpfenden Aufhängung eines Aggregats in einer dafür vorgesehenen Aufnahme entsprechend den gattungsbildenden Merkmalen des Anspruchs 1.

Eine derartige Vorrichtung ist beispielsweise bekannt aus Figur 5 der WO 2004/031012 A1. Gezeigt werden zwei formschlüssig miteinander zusammengesteckte Baueinheiten. Eine erste Baueinheit umfasst eine Ankerplatte mit senkrecht abstehendem Anker, während eine zweite Baueinheit aus einer Konsole, einem an der Konsole aufgenommenen Elastomerteil und einem zur Halterung des Elastomerteils an der Konsole dienenden Spannmittel besteht. Das zu befestigende Aggregat ist an der Konsole angebracht.

Beide Baugruppen werden getrennt voneinander vormontiert und nach der Vormontage zusammengesteckt. Dabei greifen Rasthaken am Umfang des Ankers der ersten Baueinheit in Rasthaken am Innenumfang des Spannmittels der zweiten Baueinheit ineinander ein. Anker und Spannmittel zählen demnach zu unterschiedlichen Baugruppen und sind erst nach einem Fügen dieser Baueinheiten aufeinander angeordnet. Die Einzelteile der Baueinheiten sind relativ aufwändig gestaltet. Das Zusammenstecken der Baueinheiten erfordert in Axialrichtung des Ankers verhältnismäßig viel Bauraum.

Weitere derartige Vorrichtungen sind beispielsweise vorbekannt aus der DE 100 36 575 A1. Diese bekannte Vorrichtung hat einen am Aggregat befestigten bolzenförmigen Anker, welcher abschnittsweise über die Außenabmessungen des Aggregats hinausragt. Auf diesem hinausragenden Abschnitt des Ankers ist ein Elastomerteil mit einem im Außendurchmesser reduzierten Mittenabschnitt und mit zwei, zu beiden Seiten davon angeordneten Endabschnitten größerer Außendurchmesser angeordnet. Das Elastomerteil liegt mit einer seiner Stirnflächen an der Außenwandung des Aggregats an und wirkt am dazu gegenüberliegenden Ende mit einem Bund einer Abstützhülse zusammen. Auf die Abstützhülse wirkt eine Schraubmutter ein, welche auf einen Gewindeabschnitt am äußeren Ende des Ankers aufgeschraubt ist. Durch Anziehen der Schraubmutter wird das Elastomerteil axial vorgespannt, was eine Stauchung des Elastomerteils in axialer Raumrichtung und eine Aufweitung in radialer Raumrichtung bewirkt. Aufgrund der Deformation des Elastomerteils legt sich der Mittenabschnitt umfangsseitig gegen die diesen Mittenabschnitt umgreifenden Klauenpaare der Aufnahme an. Gleichzeitig werden die beiden Endabschnitte mit ihren dem Mittenabschnitt zugewandten Flächen seitlich gegen die Klauen gedrückt. Damit ist das Aggregat mittelbar über das Elastomerteil in der Aufnahme gelagert. Üblicherweise werden zur Aggregatelagerung mehrere in verschiedene Raumrichtungen ausgerichtete Vorrichtungen eingesetzt.

Mit einer solchen elastischen Aufhängung eines Aggregats wird eine Schwingungsübertragung vom Aggregat auf die Karosserie eines Kraftfahrzeugs gedämpft. Diese Schwingungen werden hervorgerufen von einem Elektromotor, der zur Betätigung von Pumpen am Aggregat vorgesehen ist. Durch den Pumpenbetrieb lässt sich der Bremsdruck an den Radbremsen modulieren. Ohne eine entsprechende Dämpfung der dabei entstehenden mechanischen und hydraulischen Schwingungen können diese Schwingungen auf die Fahrzeugkarosserie übertragen und als störend von den Fahrzeuginsassen wahrgenommen werden.

Nachteiliger Weise ist zum Anziehen der erwähnten Schraubmuttern der Vorrichtungen ein Schraubwerkzeug notwendig. Im Fahrzeug steht in der Regel jedoch nur wenig Freiraum zur Verfügung um dieses Schraubenwerkzeug einzusetzen. Zudem erschwert und verlängert der Schraubwerkzeugeinsatz den Montagevorgang des Aggregats beim Fahrzeughersteller.

### Vorteile der Erfindung

Dem gegenüber weist eine Vorrichtung mit den kennzeichnenden Merkmalen der Anspruchs 1 den Vorteil auf, dass sie aus ihrer Grundposition in ihre Zuspannposition ohne den Einsatz von Werkzeug, also manuell, überführbar ist. Die Vorrichtung kann vollständig beim Aggregatezulieferer an das Aggregat montiert und in eine vom Fahrzeughersteller bereitgestellte, verhältnismäßig einfach geformte Konsole eingesetzt werden. Der Montagevorgang benötigt wenig Montageraum, ist einfach und in kurzer Zeit durchführbar.

Erfindungsgemäß weist die Vorrichtung hierfür ein Spannelement auf, das vor der Einführung der Vorrichtung in die den Mittenabschnitt des Elastomerteils umschließende Aufnahme auf dem Anker angeordnet ist und das jeweils in seiner Grundposition und in seiner Zuspannposition mit dem Anker verrastet ist.

Gemäß Anspruch 2 kann die Vorrichtung eine Betätigungssicherung aufweisen. Diese verhindert ein versehentliches Betätigen des Spannmittels und dient gleichzeitig als Transportsicherung für das Aggregat, indem sie Stöße abfängt und somit mechanische Beschädigungen am Aggregat verhindert. Diese Betätigungssicherung ist lösbar ausgestaltet. Das Lösen erfolgt gemäß Anspruch 3 durch eine Drehbewegung des Spannelements relativ zum Anker. Eine besonders vorteilhafte Ausgestaltung des Spannmittels ist in Anspruch 4 beansprucht. Demnach ist das Spannmittel als Buchse ausgeführt, die mit Axialschlitzen versehen ist. Dadurch weist das Spannmittel Federeigenschaften auf, durch welche es in seinen beiden Endpositionen zuverlässig mit dem Anker mechanisch verrastbar ist. Die Merkmale nach Anspruch 5 gewährleisten eine leichte Verformbarkeit des Elastomerteils während seiner Montage an die Konsole, also so lange das Spannmittel sich in seiner Grundposition befindet. Gleichzeitig bewirkt das Spannmittel in seiner Zuspannposition eine Versteifung des Elastomerteils und sichert damit dessen Verankerung an der Konsole unter den im Fahrzeugbetrieb auftretenden Bedingungen. Verschiedene alternativ verwendbare Möglichkeiten zur Verankerung der erfindungsgemäßen Vorrichtung an einem Aggregat sind in Anspruch 8 beansprucht.

## Patentansprüche

1. Vorrichtung (10) zur Schwingungen dämpfenden Aufhängung eines Aggregats (22), insbesondere eines Hydraulikaggregats einer elektronisch schlupfgeregelten Bremsanlage eines Fahrzeugs, in einer zugeordneten Aufnahme (32c), mit einem bolzenförmigen Anker (12), über den die Vorrichtung (10) am Aggregat (22) anordenbar ist und der abschnittsweise über die Außenabmessung des Aggregats (22) hinausragt, mit einem auf dem hinausragenden Abschnitt des Ankers (12) angeordneten hülsenförmigen Elastomerteil (14), das einen in seinem Außendurchmesser reduzierten Mittenabschnitt (14b) und zu beiden Seiten dieses Mittenabschnitts (14b) angeordnete erste und zweite Endabschnitte (14c, d) mit gegenüber dem Mittenabschnitt (14b) vergrößerten Außendurchmessern aufweist und mit einem auf dem Anker (12) angeordneten Spannmittel (16), wobei das Spannmittel (16) in seiner Zuspannposition das Elastomerteil (14) mit einer Axialkraft beaufschlagt, wobei das Spannmittel (16) durch manuelle Betätigung aus einer Grundposition in eine Zuspannposition überführbar ist und wobei das Spannmittel (16) axial verschiebbar auf dem Anker (12) geführt ist,
**dadurch gekennzeichnet,**
**dass** das Spannmittel (16)
- vor der Einführung der Vorrichtung (10) in die den Mittenabschnitt (14b) des Elastomerteils (14) umschließende Aufnahme (32c) auf dem Anker (12) angeordnet ist und
- jeweils in seiner Grundposition und in seiner Zuspannposition mit dem Anker (12) verrastet ist.

2. Vorrichtung nach Anspruch 1, **dadurch gekennzeichnet, dass** Spannmittel (16) und Anker (12) in Form und Abmessungen aufeinander abgestimmte Innenkontur 16h des Spannmittels 16 und sich durch Abflachungen 12g ergebenden stegförmige Außenkontur eines Ankerabschnitts 12f aufweisen, die eine lösbare Betätigungssicherung (17) bilden, mit welcher das Spannmittel (16) in seiner Grundposition unverschiebbar am Anker (12) festlegbar ist.

3. Vorrichtung nach Anspruch 2, **dadurch gekennzeichnet, dass** die Betätigungssicherung (17) durch eine Drehbewegung des Spannmittels (16) relativ zum Anker (12) lösbar ist.

4. Vorrichtung nach einem der Ansprüche 1 bis 3, **dadurch gekennzeichnet, dass** das Spannmittel (16) eine mit Axialschlitzen (20a bis d) versehene Buchse ist, mit einem mit dem Anker (12) verrastbaren Kragen (16a) und mit einem an dem Kragen (16a) angeformten, radial überstehenden Bund (16b), wobei der Bund (16b) die ihm zugewandte Stirnfläche des Elastomerteils (14) zumindest teilweise überdeckt.

5. Vorrichtung nach Anspruch 4, **dadurch gekennzeichnet, dass** der Kragen (16a) des Spannmittels (16) in eine Öffnung eines Hohlraums (18) zwischen Anker (12) und Elastomerteil (14) derart eintaucht, dass in der Grundposition des Spannmittels (16) der Kragen (16a) bis vor dem Mittenabschnitt (14b) des Elastomerteils (14) heranreicht und dass in einer Zuspannposition des Spannmittels (16) der Kragen (16b) sich über den Mittenabschnitt (14b) des Elastomerteils (14) hinaus in den Hohlraum (18) hinein erstreckt.

6. Vorrichtung nach einem der Ansprüche 1 bis 5, **dadurch gekennzeichnet, dass** das Elastomerteil (14) am Anker (12) durch Formschluss (13) gehalten ist.

7. Vorrichtung nach Anspruch 1, **dadurch gekennzeichnet, dass** das Spannmittel (16) in seinem Inneren axial zueinander beabstandete und der Grundposition und der Zuspannposition zugeordnete Ausnehmungen oder Vorsprünge (16c, d) aufweist, die in einen komplementär geformten Vorsprung oder in eine komplementär geformte Aufnahme (12e) des Ankers (12) eingreifen.

8. Vorrichtung nach Anspruch 1, **dadurch gekennzeichnet, dass** der Anker (12) mit einem ersten Ankerabschnitt (12a) in einer Aufnahmebohrung (40) des Aggregats (22) eingepresst oder eingeschraubt ist oder dass der Anker (12) mit dem Aggregat (22) verstemmt ist.

9. Aggregat (22), insbesondere Hydroaggregat einer schlupfgeregelten Bremsanlage eines Fahrzeugs, das über wenigstens zwei Vorrichtungen (10, 11a, 11b), welche am Aggregat (22) in zwei Raumrichtungen ausgerichtet angebracht sind, in einer fahrzeugseitig befestigten und den Vorrichtungen (10, 11a, 11b) zugeordnete Aufnahmen (32a, b, c) aufweisenden Konsole (30) gehalten ist, **dadurch gekennzeichnet, dass** wenigstens eine dieser Vorrichtungen (10) entsprechend den Merkmalen eines der Ansprüche 1 bis 8 ausgebildet ist.

## Claims

1. Device (10) for the vibration-damping suspension of an assembly (22), in particular of a hydraulic assembly of an electronically slip-controlled brake system of a vehicle, in an associated receptacle (32c), said device having a bolt-shaped anchor (12) by way of which the device (10) can be arranged on the assembly (22) and which projects, in sections, beyond the outer dimension of the assembly (22), having a sleeve-shaped elastomer part. (14) which is arranged on the projecting-out section of the anchor (12) and which has a central section (14b) of reduced outer diameter and has, arranged to both sides of said central section (14b), first and second end sections (14c, d) with outer diameters greater than that of the central section (14b), and having a bracing means (16) arranged on the anchor (12), wherein the bracing means (16), in its bracing position, exerts an axial force on the elastomer part (14), wherein the bracing means (16) can be transferred from a basic position into a bracing position by manual actuation, and wherein the bracing means (16) is guided in axially displaceable fashion on the anchor (12),
**characterized in that** the bracing means (16)
- is arranged on the anchor (12) before the insertion of the device (10) into the receptacle (32c), which surrounds the central section (14b) of the elastomer part (14), and
- is in each case latched in its basic position and in its bracing position by way of the anchor (12).

2. Device according to Claim 1, **characterized in that** bracing means (16) and anchor (12) have an inner contour (16h) of the bracing means (16), and have a web-like outer contour, formed by way of flattened portions (12g), of an anchor section (12f), said inner contour and outer contour being adapted to one another in terms of shape and dimensions and forming a releasable actuation lock (17) by way of which the bracing means (16) can be fixed immovably in its basic position on the anchor (12).

3. Device according to Claim 2, **characterized in that** the actuation lock (17) can be released by way of a rotational movement of the bracing means (16) relative to the anchor (12).

4. Device according to one of Claims 1 to 3, **characterized in that** the bracing means (16) is a bushing provided with axial slots (20a to d), having a collar (16a) which can be latched onto the anchor (12) and having a radially protruding flange (16b) which is formed integrally on the collar (16a) and which at least partially covers that face surface of the elastomer part (14) which faces towards said flange.

5. Device according to Claim 4, **characterized in that** the collar (16a) of the bracing means (16) protrudes into an opening of a cavity (18) between anchor (12) and elastomer part (14) such that, in the basic position of the bracing means (16), the collar (16a) extends as far as a point in front of the central section (14b) of the elastomer part (14), and that, in a bracing position of the bracing means (16), the collar (16b) extends into the cavity (18) beyond the central section (14b) of the elastomer part (14).

6. Device according to one of Claims 1 to 5, **characterized in that** the elastomer part (14) is held on the anchor (12) by way of a form fit (13).

7. Device according to Claim 1, **characterized in that** the bracing means (16) has, in its interior, recesses or projections (16c, d) which are spaced apart from one another axially and which are assigned to the basic position and to the bracing position and which engage into a complementarily shaped projection or into a complementarily shaped receptacle (12e) of the anchor (12).

8. Device according to Claim 1, **characterized in that** the anchor (12) is pressed or screwed by way of a first anchor section (12a) into a receiving bore (40) of the assembly (22), or **in that** the anchor (12) is caulked with the assembly (22).

9. Assembly (22), in particular hydraulic assembly of a slip-controlled brake system of a vehicle, which assembly, by way of at least two devices (10, 11a, 11b) which are attached to the assembly (22) so as to be oriented in two spatial directions, is held in a bracket (30) which is fastened to the vehicle and which has receptacles (32a, b, c) assigned to the devices (10, 11a, 11b), **characterized in that** at least one of said devices (10) is designed in accordance with the features of one of Claims 1 to 8.

## Revendications

1. Dispositif (10) pour la suspension amortissant les vibrations d'un groupe (22), en particulier d'un groupe hydraulique d'une installation de freinage d'un véhicule à régulation électronique d'antipatinage, dans un logement associé (32c), comprenant un ancrage en forme de boulons (12) par le biais duquel le dispositif (10) peut être disposé sur le groupe (22) et qui fait saillie en partie au-delà des dimensions extérieures du groupe (22), avec une partie en élastomère en forme de douille (14) disposée sur la portion saillante de l'ancrage (12), qui présente une portion centrale (14b) de diamètre extérieur réduit et des première et deuxième portions d'extrémité (14c, d) disposées des deux côtés de cette portion centrale (14b) avec des diamètres extérieurs agrandis par rapport à la portion centrale (14b) et avec un moyen de serrage (16) disposé sur l'ancrage (12), le moyen de serrage (16), dans sa position de serrage, sollicitant la partie en élastomère (14) avec une force axiale, le moyen de serrage (16) pouvant être amené dans une position de serrage depuis sa position de base par actionnement manuel et le moyen de serrage (16) étant guidé de manière déplaçable axialement sur l'ancrage (12),
**caractérisé en ce que**
le moyen de serrage (16)
- est disposé sur l'ancrage (12) avant l'introduction du dispositif (10) dans le logement (32c) entourant la portion centrale (14b) de la partie en élastomère (14) et
- est encliqueté avec l'ancrage (12) à chaque fois dans sa position de base et dans sa position de serrage.

2. Dispositif selon la revendication 1, **caractérisé en ce que** le moyen de serrage (16) et l'ancrage (12) présentent un contour intérieur 16h du moyen de serrage 16 et un contour extérieur d'une portion d'ancrage 12f en forme d'ergots s'obtenant par des méplats 12g, lesquels contours sont adaptés l'un à l'autre de par leur forme et leurs dimensions, et forment une fixation d'actionnement (17) amovible avec laquelle le moyen de serrage (16) peut être fixé à l'ancrage (12) de manière immobile dans sa position de base.

3. Dispositif selon la revendication 2, **caractérisé en ce que** la fixation d'actionnement (17) peut être desserrée par un mouvement de rotation du moyen de serrage (16) par rapport à l'ancrage (12).

4. Dispositif selon l'une quelconque des revendications 1 à 3, **caractérisé en ce que** le moyen de serrage (16) est un manchon pourvu d'une fente axiale (20a à d), avec un col (16a) pouvant être encliqueté avec l'ancrage (12) et avec un épaulement (16b) faisant saillie radialement, façonné au niveau du col (16a), l'épaulement (16b) recouvrant au moins en partie la surface frontale de la partie en élastomère (14) tournée vers lui.

5. Dispositif selon la revendication 4, **caractérisé en ce que** le col (16a) du moyen de serrage (16) plonge dans une ouverture d'une cavité (18) entre l'ancrage (12) et la partie en élastomère (14) de telle sorte que dans la position de base du moyen de serrage (16), le col (16a) s'étende jusqu'avant la portion centrale (14b) de la partie en élastomère (14) et que dans une position de serrage du moyen de serrage (16), le col (16b) s'étende à l'intérieur de la cavité (18) au-delà de la portion centrale (14b) de la partie en élastomère (14).

6. Dispositif selon l'une quelconque des revendications 1 à 5, **caractérisé en ce que** la partie en élastomère (14) est retenue sur l'ancrage (12) par engagement par correspondance de formes (13).

7. Dispositif selon la revendication 1, **caractérisé en ce que** le moyen de serrage (16) présente des évidements ou des saillies (16c, d) espacés les uns des autres axialement en son intérieur et associés à la position de base et à la position de serrage, lesquels viennent en prise dans une saillie formée de manière complémentaire ou dans un logement formé de manière complémentaire (12e) de l'ancrage (12).

8. Dispositif selon la revendication 1, **caractérisé en ce que** l'ancrage (12) est pressé ou vissé avec une première portion d'ancrage (12a) dans un alésage de réception (40) du groupe (22) ou **en ce que** l'ancrage (12) est maté avec le groupe (22).

9. Groupe (22), en particulier groupe hydraulique d'une installation de freinage d'un véhicule à régulation d'antipatinage, qui est retenu par le biais d'au moins deux dispositifs (10, 11a, 11b) qui sont montés sur le groupe (22) de manière orientée dans deux directions spatiales, dans une console (30) présentant des logements (32a, b, c) fixés du côté du véhicule et associés aux dispositifs (10, 11a, 11b), **caractérisé en ce qu'**au moins l'un de ces dispositifs (10) est réalisé selon les caractéristiques de l'une des revendications 1 à 8.
